# EUROPEAN PATENT APPLICATION

(11) **EP 4 138 360 A1**
(43) Date of publication of application: **22.02.2023**
(21) Application number: 21192397.4
(22) Date of filing: 20.08.2021
(51) Int. Cl.: H04L 41/042, H04L 41/16

(54) **INFERENCE-AWARE ML MODEL PROVISIONING**

(71) Applicant: Nokia Solutions and Networks Oy, 02610 Espoo (FI)
(72) Inventor: PAPAGEORGIOU, Apostolos, 81541 Munich (DE); KUNZMANN, Gerald, 81541 Munich (DE); LAIR, Yannick, 78960 Voisins le Bretonneux (FR); BEGA, Dario, 80802 Munich (DE)
(74) Representative: Nokia EPO representatives

(57) **Abstract**

There are provided measures for enabling/realizing inference-aware ML (machine learning) model provisioning, e.g. to support network data analytics, in a mobile/wireless communication system. Such measures exemplarily comprise that ML model request information, including model-related information indicating one or more properties of a requested ML model and inference-related information indicating one or more properties of execution of inference based on the requested ML model, is provided from a first network entity (representing a service consumer of a network data analytics service) to a second network entity (representing a service provider of the network data analytics service), the second network entity specifies an ML model to be provisioned based on the ML model request information, and ML model information about the specified ML model is provided from the second network entity to the first network entity.

## Description

### Field

The present disclosure relates to inference-aware ML (machine learning) model provisioning. More specifically, the present disclosure relates to measures/mechanisms (including methods, apparatuses (i.e. devices, entities, elements, nodes and/or functions) and computer program products) for enabling/realizing inference-aware ML (machine learning) model provisioning in a mobile/wireless communication system.

### Background

Basically, the present disclosure relates to machine-learning (ML) based functions and/or operations and/or services in a mobile/wireless communication system, e.g. 3GPP-standardized mobile/wireless communication system, such as a 5G/NR system or a next-generation system (beyond 5G).

For example, in recent 5G/NR systems, enhancements related to network automation involve an ML (machine-learning) model provision service, i.e. the capability of provisioning ML models which can be used to perform or support certain types of network data analytics. The ML model provision service is offered by an entity called NWDAF(MTLF), which is a Network Data Analytics Function (NWDAF) containing a Model Training Logical Function (MTLF), and is consumed by an entity called NWDAF(AnLF), which is a Network Data Analytics Function (NWDAF) containing an Analytics Logical Function (AnLF).

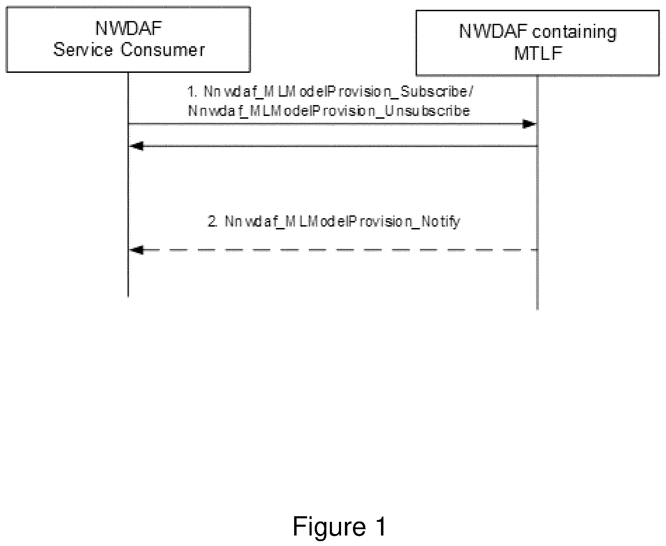

Figure 1 shows a sequence diagram illustrating a procedure of standardized ML model provisioning in accordance with 3GPP TS 23.288, V17.1.0, section 6.2A.1. As is evident from Figure 1, the service operation for requesting an ML model is called Nnwdaf_MLModelProvision_Subscribe, and the service operation for provisioning the requested ML model is called Nnwdaf_MLModelProvision_Notify. In this regard, each ML model can be used to perform or support a specific type of network data analytics (i.e. an AnalyticsId in 3GPP terminology), and the input data that are used by the ML model can include some or all of data sources that are defined as possible (optional) data sources for the respective AnalyticsId.

When an NWDAF acting as service consumer, i.e. an NWDAF(AnLF), invokes the ML provision service of an NWDAF acting as service provider, i.e. an NWDAF(MTLF), by Nnwdaf_MLModelProvision_Subscribe, the MTLF may (decide to) perform different operations. Namely, depending on the information provided in the request (e.g. at least one of one or more model identifiers for the requested ML model(s), required performance, required impact on system performance, required accuracy of the requested ML model), the MTLF may perform one of the following operations (before sending Nnwdaf_MLModelProvision_Notify):
a) select an existing trained ML Model as the ML model to be provisioned,
b) modify an existing trained ML model to become the ML model to be provisioned, e.g., by triggering further re-/training of an existing trained ML model before being provisioned, or
c) generate a new ML model to be trained as the ML model to be provisioned, by triggering training of a new ML model.

In operation a), no significant processing is required at the NWDAF(MTLF). In operations b) and c), the NWDAF(MTLF) is required to perform ML model re-/training, and may (need to) initiate data collection from one or more data sources, such as NFs, DCCF, OAM or the like, for collecting data required for the re-/training of the ML model to be provisioned.

Therefore, the MTLF's decision among operations a), b) and c) may:
- lead to very different levels of computational load on the NWDAF(MTLF), and/or
- increase the networking or communication load on the NWDAF(MTLF) as well as on other Network Functions (NFs), while this increase may highly vary depending on how much data, how many data sources, etc. are used.

The MTLF's decision among operations a), b) and c) is currently taken by the MTLF based on some local (unspecified) logic, with the obvious criterion being at least one of the required performance/impact and/or the required accuracy that the provisioned ML model is able to achieve.

Based on the information provided in the request, even if a "required accuracy" value is included, the MTLF may decide in favor of an operation that leads to overly high computational and/or networking or communication load (i.e. overhead) without any (significant) benefit, e.g. no really increased accuracy during the inference phase (i.e. in deriving network data analytics based on the requested and provisioned ML model) at the service consumer, compared to other operations which would produce less computational and/or networking or communication load (i.e. overhead).

More concretely, if an NWDAF(AnLF) subscribes to an NWDAF(MTLF) for an ML model for a specific type of network data analytics, the MTLF decides that the best option is operation b), i.e. to perform further training of an existing ML model, or operation c), i.e. to create a new ML model, because it is expected to lead to higher accuracy. Yet, it may happen that the accuracy achieved when the ML model, which is provided using operation b) or c), is later used by the NWDAF(AnLF) is not (significantly) higher than the accuracy that would be achievable by an already trained ML model, which might also be a more lightweight model. Accordingly, a computational and/or networking or communication load (i.e. overhead) would be produced, which does not justify in view of the thus achievable effect in terms of network data analytics.

Accordingly, there is room for improvement and a desire/need for a technique for enhancing and/or improving/optimizing ML model provisioning, i.e. an ML model provision service, especially for facilitating a more appropriate (well-informed) decision on the operation to be performed by a service provider in response to an ML model request from a service consumer.

### Summary

Various exemplifying embodiments of the present disclosure aim at addressing at least part of the above issues and/or problems and drawbacks.

Various aspects of exemplifying embodiments of the present disclosure are set out in the appended claims.

The scope of protection sought for various embodiments of the invention is set out by the independent claims. The embodiments and/or examples and features, if any, described in this specification that do not fall under the scope of the independent claims are to be interpreted as examples useful for understanding various embodiments of the invention.

According to an example aspect of the present disclosure, there is provided a method of (or, stated in other words, operable or for use in/by) a network entity in a mobile communication system, comprising: obtaining machine-learning model request information, including model-related information indicating one or more properties of a requested machine-learning model and inference-related information indicating one or more properties of execution of inference based on the requested machine-learning model, specifying a machine-learning model to be provisioned based on the obtained machine-learning model request information, and provisioning machine-learning model information about the specified machine-learning model.

According to an example aspect of the present disclosure, there is provided an apparatus of (or, stated in other words, operable or for use in/by) a network entity in a mobile communication system, comprising: means or circuitry for obtaining machine-learning model request information, including model-related information indicating one or more properties of a requested machine-learning model and inference-related information indicating one or more properties of execution of inference based on the requested machine-learning model, means or circuitry for specifying a machine-learning model to be provisioned based on the obtained machine-learning model request information, and means or circuitry for provisioning machine-learning model information about the specified machine-learning model.

According to an example aspect of the present disclosure, there is provided an apparatus of (or, stated in other words, operable or for use in/by) of a network entity in a mobile communication system, comprising at least one processor and at least one memory including computer program code, wherein the processor, with the at least one memory and the computer program code, is configured to cause the apparatus to perform: obtaining machine-learning model request information, including model-related information indicating one or more properties of a requested machine-learning model and inference-related information indicating one or more properties of execution of inference based on the requested machine-learning model, specifying a machine-learning model to be provisioned based on the obtained machine-learning model request information, and provisioning machine-learning model information about the specified machine-learning model.

According to various developments/modifications, any one of the aforementioned method-related and/or apparatus-related example aspects of the present disclosure may include one or more of the following features:
model-related information comprises an accuracy value indicating a requested level of accuracy to be achieved by the requested machine-learning model,
inference-related information comprises at least one of inference usage data being data to be used for execution of inference based on the requested machine-learning model, inference granularity data indicating a granularity of data to be used for execution of inference based on the requested machine-learning model, inference application data indicating an application for execution of inference based on the requested machine-learning model, and inference environment data indicating a condition of an execution environment to be used for execution of inference based on the requested machine-learning model,
inference usage data comprises one or more data sources used for collecting data to be used for execution of inference,
inference usage data comprises at least one of a weight indication indicating a relative amount of data to be used for execution of inference, which is collected from respective data sources, and data details indicating, for respective data sources, one or more of at least one specific instance and/or set of data to be used for execution of inference and at least one specific parameter,
inference granularity data comprises at least one of a minimum sampling rate or ratio, a maximum time interval and a total number of input values of data to be used for execution of inference,
inference environment data comprises at least one of computation and/or memory capacity available for execution of inference,
specifying the machine-learning model to be provisioned comprises one of selecting an existing trained machine-learning model as the machine-learning model to be provisioned, modifying an existing trained machine-learning model to become the machine-learning model to be provisioned, and generating a new machine-learning model to be trained as the machine-learning model to be provisioned,
modifying and/or generating comprises collecting training data, and re-/training using the collected training data,
specifying the machine-learning model to be provisioned comprises at least one of determining whether a machine-learning model is capable of achieving a level of accuracy to be achieved by the requested machine-learning model or a tolerance value based on the level of accuracy to be achieved by the requested machine-learning model, determining whether a machine-learning model is capable of achieving its theoretical accuracy when inference is executed based thereon, determining a machine-learning model which achieves the highest accuracy, determining a machine-learning model which is lightest in terms of one or more of inference execution load and any one of communication, computation and/or networking overhead, determining training data for a new machine-learning model or an existing trained machine-learning model, and determining a level of required re-/training of an existing trained machine-learning model or a new machine-learning model,
machine-learning model information comprises training data and/or information on training data, said training data being data used for training of the specified machine-learning model,
training data comprises one or more of at least one data source, at least one specific instance and/or set of data and at least one specific parameter,
machine-learning model request information is included in a machine-learning model provisioning request or a machine-learning model provision service subscription message,
machine-learning model request information is obtained by extraction from a received machine-learning model provisioning request or a received machine-learning model provision service subscription message,
machine-learning model information is included in a machine-learning model provisioning response or machine-learning model provision service notification message,
machine-learning model information is provisioned by inclusion in a machine-learning model provisioning response to be transmitted or a machine-learning model provision service notification message to be transmitted,
the network entity is or comprises a network data analytics function, such as a network data analytics function containing a model training logical function,
machine-learning model request information is obtained from and/or the machine-learning model information is provisioned to or for a network data analytics function, such as a network data analytics function containing an analytics logical function,
the machine-learning model is requested for enabling or supporting network data analytics,
the mobile communication system is based on a 3GPP standard, such as a 5G or NR system.

According to an example aspect of the present disclosure, there is provided a method of (or, stated in other words, operable or for use in/by) a network entity in a mobile communication system, comprising: providing machine-learning model request information, including model-related information indicating one or more properties of a requested machine-learning model and inference-related information indicating one or more properties of execution of inference based on the requested machine-learning model, and obtaining machine-learning model information about a specified machine-learning model in response to the machine-learning model request information.

According to an example aspect of the present disclosure, there is provided an apparatus of (or, stated in other words, operable or for use in/by) a network entity in a mobile communication system, comprising: means or circuitry for providing machine-learning model request information, including model-related information indicating one or more properties of a requested machine-learning model and inference-related information indicating one or more properties of execution of inference based on the requested machine-learning model, and means or circuitry for obtaining machine-learning model information about a specified machine-learning model in response to the machine-learning model request information.

According to an example aspect of the present disclosure, there is provided an apparatus of (or, stated in other words, operable or for use in/by) a network entity in a mobile communication system, comprising at least one processor and at least one memory including computer program code, wherein the processor, with the at least one memory and the computer program code, is configured to cause the apparatus to perform: providing machine-learning model request information, including model-related information indicating one or more properties of a requested machine-learning model and inference-related information indicating one or more properties of execution of inference based on the requested machine-learning model, and obtaining machine-learning model information about a specified machine-learning model in response to the machine-learning model request information.

According to various developments/modifications, any one of the aforementioned method-related and/or apparatus-related example aspects of the present disclosure may include one or more of the following features:
model-related information comprises an accuracy value indicating a requested level of accuracy to be achieved by the requested machine-learning model,
the inference-related information comprises at least one of inference usage data being data to be used for execution of inference based on the requested machine-learning model, inference granularity data indicating a granularity of data to be used for execution of inference based on the requested machine-learning model, inference application data indicating an application for execution of inference based on the requested machine-learning model, and inference environment data indicating a condition of an execution environment to be used for execution of inference based on the requested machine-learning model,
inference usage data comprises one or more data sources used for collecting data to be used for execution of inference,
the inference usage data comprises at least one of a weight indication indicating a relative amount of data to be used for execution of inference, which is collected from respective data sources, and data details indicating, for respective data sources, one or more of at least one specific instance and/or set of data to be used for execution of inference and at least one specific parameter,
inference granularity data comprises at least one of a minimum sampling rate or ratio, a maximum time interval and a total number of input values of data to be used for execution of inference,
inference environment data comprises at least one of computation and/or memory capacity available for execution of inference,
machine-learning model information comprises training data and/or information on training data, said training data being data used for training of the specified machine-learning model,
training data comprises one or more of at least one data source, at least one specific instance and/or set of data and at least one specific parameter,
the method, functionality or operability further comprises obtaining a network function service request, executing inference based on the specified machine-learning model for deriving a result of the requested network function service, and providing a network function service response, including the derived result and at least one of inference data and information on inference data, said inference data being data used for execution of inference,
providing the machine-learning model request information is triggered by obtaining the network function service request,
the inference data relates to one or more of at least one data source, at least one specific instance and/or set of data and at least one specific parameter,
machine-learning model request information is included in a machine-learning model provisioning request or a machine-learning model provision service subscription message,
machine-learning model request information is provided by inclusion in a machine-learning model provisioning request to be transmitted or a machine-learning model provision service subscription message to be transmitted,
machine-learning model information is included in a machine-learning model provisioning response or machine-learning model provision service notification message,
machine-learning model information is obtained by extraction from a received machine-learning model provisioning response or a received machine-learning model provision service notification message,
the network entity is or comprises a network data analytics function, such as a network data analytics function containing an analytics logical function,
machine-learning model request information is provided to or for and/or the machine-learning model information is obtained from a network data analytics function, such as a network data analytics function containing a model training logical function,
the machine-learning model is requested for enabling or supporting network data analytics,
the mobile communication system is based on a 3GPP standard, such as a 5G or NR system.

According to an example aspect of the present disclosure, there is provided a computer program product comprising (computer-executable) computer program code which, when the program code is executed (or run) on a computer or the program is run on a computer (e.g. a computer of an apparatus according to any one of the aforementioned apparatus-related example aspects of the present disclosure), is configured to cause the computer to carry out the method according to any one of the aforementioned method-related example aspects of the present disclosure.

The computer program product may comprise or may be embodied as a (tangible/non-transitory) computer-readable (storage) medium or the like, on which the computer-executable computer program code is stored, and/or the program is directly loadable into an internal memory of the computer or a processor thereof.

Further developments and/or modifications of the aforementioned exemplary aspects of the present disclosure are set out in the following.

By way of exemplifying embodiments of the present disclosure, inference-aware ML (machine learning) model provisioning in a mobile/wireless communication system can be enabled/realized. Thereby, ML model provisioning, i.e. an ML model provision service, can be enhanced and/or improved/optimized, especially facilitating a more appropriate (well-informed) decision on the operation to be performed by a service provider in response to an ML model request from a service consumer.

### Brief description of the drawings

In the following, the present disclosure will be described in greater detail by way of non-limiting examples with reference to the accompanying drawings, in which
Figure 1 shows a sequence diagram illustrating a procedure of standardized ML model provisioning,
Figure 2 shows a flowchart illustrating an example of a method or process according to at least one exemplifying embodiment,
Figure 3 shows a flowchart illustrating an example of a method or process according to at least one exemplifying embodiment,
Figure 4 shows a sequence diagram illustrating an example of a procedure of inference-aware ML model provisioning according to at least one exemplifying embodiment,
Figure 5 shows a flowchart illustrating an example of a method or process according to at least one exemplifying embodiment,
Figure 6 shows a schematic block diagram illustrating an example of a structure of apparatuses according to at least one exemplifying embodiment, and
Figure 7 shows a schematic block diagram illustrating an example of a structure of apparatuses according to at least one exemplifying embodiment.

### Detailed description

The present disclosure is described herein with reference to particular non-limiting examples and to what are presently considered to be conceivable (examples of) embodiments. A person skilled in the art will appreciate that the present disclosure is by no means limited to these examples and embodiments, and may be more broadly applied.

It is to be noted that the following description mainly refers to specifications being used as non-limiting examples for certain exemplifying network configurations and system deployments. Namely, the following description mainly refers to 3GPP standards, specially referring to 5G/NR standardization, being used as non-limiting examples. As such, the description of exemplifying embodiments given herein specifically refers to terminology which is directly related thereto. Such terminology is only used in the context of the presented non-limiting examples and embodiments, and does naturally not limit the present disclosure in any way. Rather, any other system configuration or deployment may equally be utilized as long as complying with what is described herein and/or exemplifying embodiments described herein are applicable to it.

For examples, the present disclosure is equally applicable in any mobile/wireless communication system, e.g. 3GPP-standardized mobile/wireless communication system, such as a 5G/NR system or a next-generation system (beyond 5G). More specifically, the present disclosure is applicable to any machine-learning (ML) based function and/or operation and/or service in any mobile/wireless communication system, such as for example an ML model provisioning service in the context of network automation, e.g. performing or supporting network data analytics.

Hereinafter, various exemplifying embodiments and implementations of the present disclosure and its aspects are described using several variants and/or alternatives. It is generally to be noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of operations or actions is generally illustrative/exemplifying, and any other order of respective operations or actions is equally conceivable, if feasible.

According to exemplifying embodiments of the present disclosure, in general terms, there are provided measures/mechanisms (including methods, apparatuses (i.e. devices, entities, elements and/or functions) and computer program products) for enabling/realizing inference-aware ML (machine learning) model provisioning in a mobile/wireless communication system can be enabled/realized.

Even when the subsequent description refers to network automation, e.g. network data analytics, such references are made by way of example and for illustrative purposes only. Irrespective thereof, exemplifying embodiments of the present disclosure are generally applicable to any machine-learning (ML) based function and/or operation and/or service in any mobile/wireless communication system.

In the subsequent description, reference is (mostly) made to the request for and provision of a (i.e. one) ML model. Yet, such references are made for illustrative purposes and for the sake of simplicity only, while any number of (two or more) ML models may be requested and provisioned (with one or more requests, operations, etc.). That is, any reference to an ML model shall mean or encompass one or more ML models.

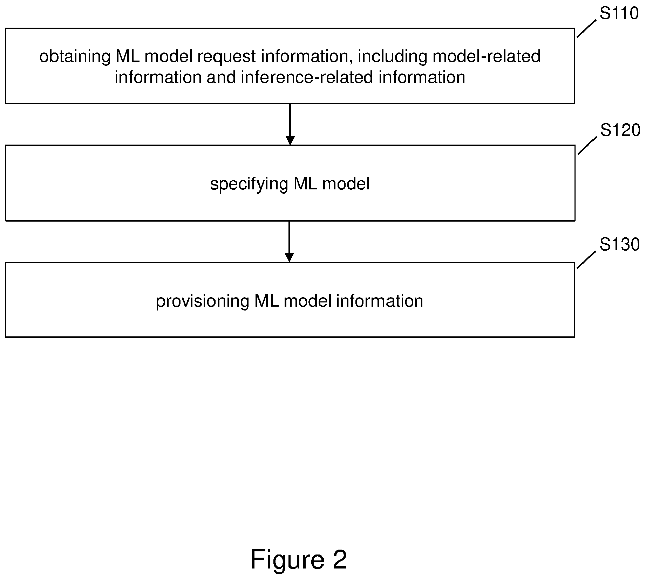

Figure 2 shows a flowchart illustrating an example of a method or process according to at least one exemplifying embodiment. The method or process of Figure 2 is a method or process of (or, stated in other words, operable or for use in/by) of a network entity in a mobile/wireless communication system, i.e. a network entity representing a service provider of an ML model provision service. For example, the thus illustrated method or process is applicable by or at a NWDAF(MTLF) or the MTLF thereof.

As shown in Figure 2, the method or process comprises an operation (S110) of obtaining ML model request information, including model-related information and inference-related information, wherein the model-related information indicate one or more properties of a requested ML model and the inference-related information indicate one or more properties of execution of inference based on the requested ML model, an operation (S120) of specifying an ML model to be provisioned based on the obtained ML model request information, and an operation (S130) of provisioning ML model information about the specified ML model.

The specifying operation (S120) may comprise (taking a decision for) performing one of the following operations, depending on (one or more of) the model-related information and (one or more of) the inference-related information:
a) selecting an existing trained ML Model as the ML model to be provisioned,
b) modifying an existing trained ML model to become the ML model to be provisioned, by triggering further re-/training of an existing trained ML model before being provisioned, i.e. potentially including collecting training data and re-/training using the collected training data, or
c) generating a new ML model to be trained as the ML model to be provisioned, by triggering training of a new ML model, i.e. potentially including collecting training data and training using the collected training data.

In the context of (taking a decision for) performing one of the aforementioned operations, the specifying operation (S120) may comprise at least one of
determining whether an ML model is capable of achieving a level of accuracy to be achieved by the requested ML model or a tolerance value based on a level of accuracy to be achieved by the requested ML model,
determining whether an ML model is capable of achieving its theoretical accuracy when inference is executed based thereon,
determining an ML model which achieves the highest accuracy,
determining an ML model which is lightest in terms of one or more of inference execution load and any one of communication, computation and/or networking overhead,
determining training data for a new ML model or an existing trained ML model,
determining a level of required re-/training of an existing trained ML model or a new ML model.

With regard to the above point of determining a lightest ML model, it is to be noted that an ML model may be (considered to be) light/lightest when being used (e.g. at a service consumer), i.e. in/during inference, namely light/lightest in terms of inference execution load, and/or when being trained (e.g. at a service provider), i.e. in/during training with respect to e.g. communication overhead to collect training data, computation effort required for the training, etc., namely in terms of any one of communication, computation and/or networking overhead.

With regard to the above point of determining training data, it is to be noted that determining training data for a new ML model may comprise determining new training data, and/or determining training data for an existing trained ML model may comprise determining additional and/or adjusted training data (as compared to the training data used for initial/previous training of the existing trained ML model). In determining additional and/or adjusted training data for the existing trained ML model, the need of adjustment and/or the extent of the training data or its adjustment may also be determined.

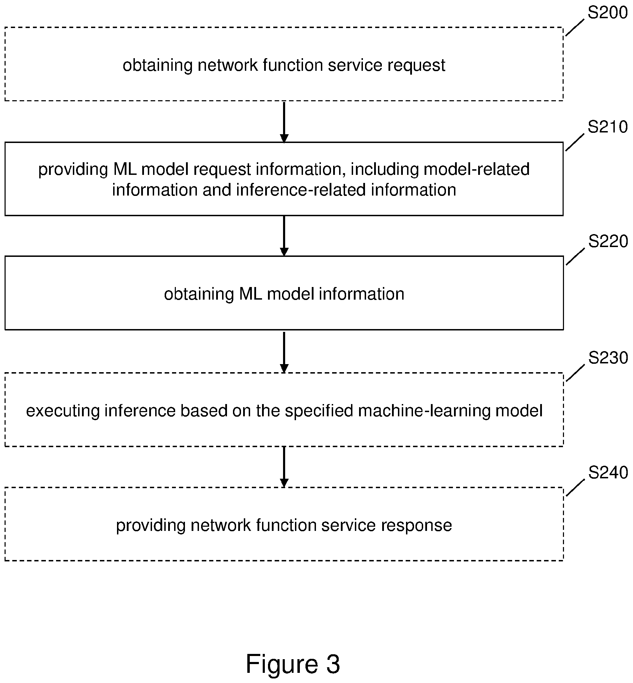

Figure 3 shows a flowchart illustrating an example of a method or process according to at least one exemplifying embodiment. The method or process of Figure 3 is a method or process of (or, stated in other words, operable or for use in/by) of a network entity in a mobile/wireless communication system, i.e. a network entity representing a service consumer of an ML model provision service. For example, the thus illustrated method or process is applicable by or at a NWDAF(AnLF) or the AnLF thereof.

As shown in Figure 3, the method or process comprises an operation (S210) of providing ML model request information, including model-related information and inference-related information, wherein the model-related information indicates one or more properties of a requested ML model and the inference-related information indicates one or more properties of execution of inference based on the requested ML model, and an operation (S220) of obtaining ML model information about a specified ML model in response to the ML model request information.

As indicated by dashed lines, the method or process may also comprise one or more of the following:
an operation (S200) of obtaining a network function service request,
an operation (S230) of executing inference based on the specified ML model for deriving a result of the requested network function service, and
an operation (S240) of providing a network function service response, including the derived result and at least one of inference data and information on inference data, said inference data being data used for (execution of) inference.

Referring to Figures 2 and 3, the provisioning operation (S130) and/or the obtaining operation (S220) may be such that the machine-learning model information may comprise to the specified ML model as such and/or an identifier or location thereof. Further, the machine-learning model information (e.g. in addition to the specified ML model as such and/or an identifier or location thereof) may comprise training data and/or information on training data (such as information or metadata relating to training data), wherein the training data are data used for training of the specified ML model. Namely, the thus provisioned information (or, stated in other words, the response to the request) may comprise information about the data that have been actually used for the training of the thus specified (and provisioned) ML model. This training data may comprise one or more of at least one data source, at least one specific instance and/or set of data and at least one specific parameter (of the data).

In a system according to at least one exemplifying embodiment, such as a system as is illustrated in Figure 1, the two methods or processes of Figures 2 and 3 are mutually cooperative. Namely, a service consumer in the system performs the method or process of Figure 3, and a service provider in the system performs the method or process of Figure 2, such that operations S110 and S210 correspond to each other and operations S130 and S220 correspond to each other, respectively.

The aforementioned model-related information represents basic information, i.e. information related to the requested ML model. This basic information (which represents one or more (basic) inputs to ML model specification, i.e. a corresponding logic for specifying an ML model to be provisioned) may comprise e.g. at least one of one or more model identifiers for the requested ML model(s), required performance, required impact on system performance, required accuracy of the requested ML model, or the like. The required accuracy may be or represent an accuracy value indicating a required/requested level of accuracy to be achieved by the requested ML model. For example, when the ML model is requested for (being used in/for inference for) deriving network data analytics, the required accuracy may refer or correspond to the accuracy of the derived network data analytics, i.e. the accuracy of the result of (the derivation, operation or calculation for) an underlying network data analytics service. It is to be noted that the service consumer might request an ML model with/for "very high" accuracy, however, e.g. as not yet sufficient inference data is available, the actually achieved accuracy of the analytics result might still be "low", "intermediate" or the like.

The aforementioned inference-related information represents additional information, i.e. information related to how inference will actually take place at the service consumer once the ML model has been received/provisioned and put into action, thus providing for service consumer and/or inference awareness of/at the service provider. This additional information (which represents one or more (additional) inputs to ML model specification, i.e. a corresponding logic for specifying an ML model to be provisioned) is used by the service provider to take a more appropriate (well-informed) decision on the operation to be performed for ML model provisioning.

In view of the above-mentioned meaning/significance of the inference-related information, particularly its relation to the actual inference operation/execution of/by the service consumer, it could be said that the inference-related information indicates one or more properties of (or, relating to) execution of inference, or defines details (or, specifics) of (execution of) inference, or defines details (or, specifics) on how inference is, will or is to be executed, or defines details (or, specifics) for usage in (execution of) inference, or the like.

According to various exemplifying embodiments, the inference-related information may comprises at least one of inference usage data being data to be used for (execution of) inference based on the requested ML model, inference granularity data indicating a granularity of data to be used for (execution of) inference based on the requested ML model, inference application data indicating an application for (execution of) inference based on the requested machine-learning model, and inference environment data indicating a condition of an execution environment to be used for (execution of) inference based on the requested ML model.

Any one of the these information assists the service provider to take a more appropriate (well-informed) decision on the operation to be performed for ML model provisioning, taking into account its thus acquired service consumer and/or inference awareness. Namely, the service provider is thus enabled to consider or know which operation, i.e. which ML model (with which (level of) re-/training), provides for proper (or sufficiently accurate) inference at/by the service consumer and/or exhibits proper (or sufficiently low) load/overhead at/by the service provider. Based on such consideration or knowledge, the service provider is enabled to choose the most efficient operation, i.e. the operation exhibiting lowest requirements (i.e. inference execution load) in/for inference and/or producing lowest computational and/or networking or communication load (i.e. overhead) in/for training while still providing for an appropriate ML model (complying with the underlying request). This generally holds for inference-related information, and specifically holds for inference usage data, inference granularity data, inference application data, inference environment data or any combination thereof.

The inference usage data (which may also be referred to as "data used for inference") may comprise one or more data sources used for collecting data to be used for (execution of) inference. Further, the inference usage data may comprise a weight indication indicating a relative amount of data to be used for inference, which is collected from respective data sources, and/or data details indicating, potentially for respective data sources, one or more of at least one specific instance and/or set of data to be used for (execution of) inference and at least one specific parameter to be used for (execution of) inference.

That is, the data used for inference may include the actual data sources that will be used for (execution of) inference, potentially including a weight indicator (e.g. percentage), which indicates the relative amount of data that will be available from each data source in/during inference. For example, for an AnalyticsId that can potentially use data from AMF (Access and Mobility Management Function), AF (Application Function), SMF (Session Management Function) and OAM (Operations, Administration, and Maintenance), the service consumer may indicate [(AMF, 70%), (AF, 30%)], i.e. that, in/during inference based on the requested ML model, 70% of data will be collected/used from AMF and 30% of data will be collected/used from AF (while no data from OAM and SMF will be collected/used). For the data sources to be used (e.g. here AMF and OAM), further information can be provided in order to indicate specific instances or sets (of data) that will be used in/during inference, and/or specific parameters that will be collected from those data sources. For example, the service consumer may indicate that the UE location is collected/used from the AF and the Application ID is collected/used from the AF, while all other parameters are collected/used from the AMF.

The inference granularity data may comprise at least one of a minimum sampling rate or ratio, a maximum time interval and a total number of input values of data to be used for (execution of) inference. Namely, a granularity of input data that will be used for (execution of) inference can thus be indicated, e.g. expressed as minimum sampling rate or ratio, maximum time interval, and/or total number of input values.

The inference application data may indicate or comprise information about any one or more of utilization, purpose or use case, which is indicative of the intended application of the ML model, i.e. its usage in/for inference. Thereby, for example, the model provider may understand that the model consumer intends to use (apply) the same AnalyticsID for two different decisions or use cases, and may consider this in its specifying operation, namely be specifying different ML models for the different decisions or use cases.

The inference environment data may comprise at least one of computation and/or memory capacity available for executing inference. Namely, a target execution environment (at the service consumer) may be indicated, e.g. including computational capacity and memory that will be available when performing inference.

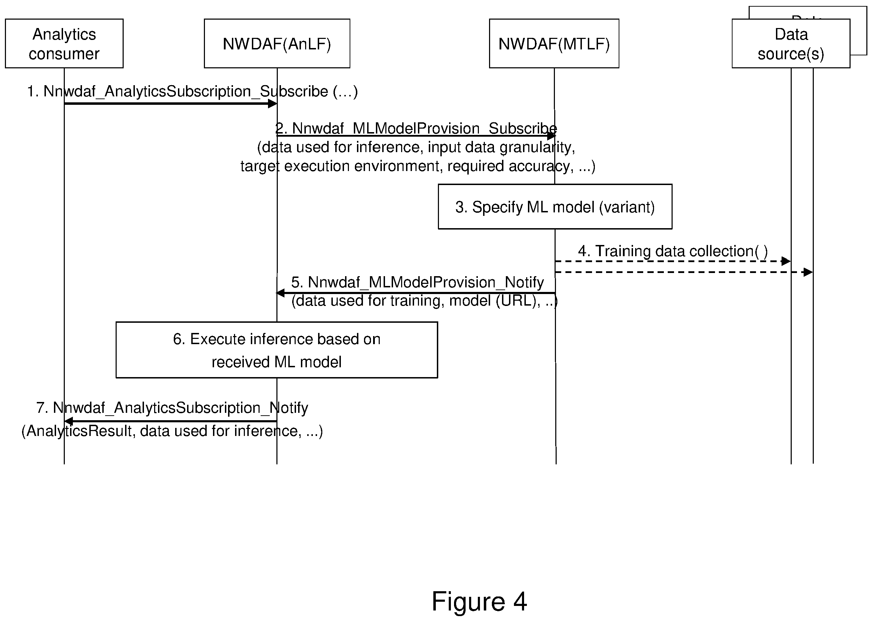

Figure 4 shows a sequence diagram illustrating an example of a procedure of inference-aware ML model provisioning according to at least one exemplifying embodiment.

With Figure 4, an example is explained, in which ML model provisioning in the context of performing or supporting network data analytics is applied in a 3GPP-standardized system environment, especially a core network thereof, such as 5G Core. In this example, an analytics consumer, such as e.g. a PCF, is a service consumer of an analytics service, which is a network function (NF) service provided by an NWDAF(AnLF) which at the same time is a service provider of the analytics service and a service consumer of an ML model provision service, while an NWDAF(MTLF) is a service provider of the ML model provision service (while consuming data from the data source/s).

Accordingly, the procedure of Figure 4 shows an "end-to-end interaction", which includes the request of analytics data from an NF service consumer (denoted as "Analytics consumer"), which may be the trigger for the provisioning of an ML model from the NWDAF(MTLF) to the NWDAF(AnLF) that acts as an NF service consumer for ML model provisioning. The depicted "Data source(s)" can be any NF or other sources of analytics input data, such as AMF, SMF, OAM, or the like.

In step 1, the analytics consumer, as the NF service consumer, subscribes to provisioning of or notification for analytics data (of a certain analytics type, i.e. a certain AnalyticsId) at the NWDAF(MTLF). In this example, such request is made by (transmitting) an analytics service subscription message such as Nnwdaf_AnalyticsSubscription_Subscribe, i.e. a corresponding service operation.

In step 2, the NWDAF(AnLF), as the NF service provider and the ML provision service consumer, requests an ML model that can be used to support the AnalyticsId requested in step 1, either because it has no ML model for this purpose or because its available ML model(s) may not perform sufficiently well (as requested). The request of step 2 may be triggered by the request of step 1, but it may also be triggered by a different trigger before or after step 1. In this example, such request is made by (transmitting) an ML model provision service subscription message such as Nnwdaf_MLModelProvision_Subscribe, i.e. a corresponding service operation. Besides some basic (model-related) information on the requested ML model(s) (such as e.g. at least one of requested ML model(s), required performance, required impact on system performance, required accuracy of the requested ML model, or the like), the request includes additional (inference-related) information. In this example, the required accuracy is included as basic (model-related) information, and data used for inference, input data granularity and target execution environment are included as additional (inference-related) information.

Accordingly, the NWDAF(AnLF) provides ML model request information, and the NWDAF(MTLF) obtains the ML model request information. In this example, as the ML model request information is included in Nnwdaf_MLModelProvision_Subscribe, i.e. an ML model provisioning request or an ML model provision service subscription message, the ML model request information is provided at/by the NWDAF(AnLF) by inclusion in the request/message to be transmitted, i.e. Nnwdaf_MLModelProvision_Subscribe, and the ML model request information is obtained at/by the NWDAF(MTLF) by extraction from the received request/message, i.e. Nnwdaf_MLModelProvision_Subscribe.

In step 3, the NWDAF(MTLF) specifies an ML model to be provisioned. Namely, the NWDAF(MTLF), based on its related logic, decides to perform one of the aforementioned operations for specifying the ML model (or an ML model variant) in response to the request. To this end, (one or more of) the basic (model-related) information and (one or more of) the additional (inference-related) information may be used. In this example, the NWDAF(MTLF) selects an existing trained ML model or modifies (i.e. re-/trains) an existing ML model or generates a new ML model to be provisioned, and - for the second and third options - determines a level of re-/training of the ML model, based on (one or more of) the data used for inference, the input data granularity, the target execution environment and the required accuracy.

Accordingly, as the case may be, step 3 also comprises a corresponding re-/training of an ML model to be provisioned when ML model modification or generation is selected. In such case, the NWDAF(MTLF) also performs step 4, as described below.

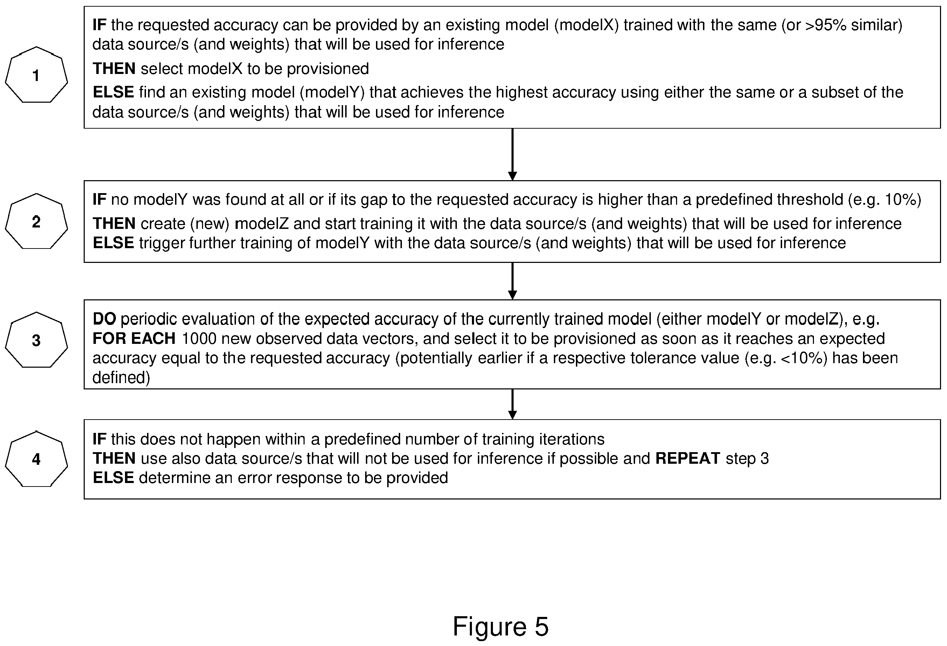

Figure 5 shows a flowchart illustrating an example of a method or process according to at least one exemplifying embodiment, specifically an example algorithm that can be used by the NWDAF(MTLF) for specifying the ML model. The thus illustrated example algorithm, which exhibits 4 steps by way of example, includes accuracy estimation and training evaluation points, but there are various possibilities for the MTLF's logic for specifying the ML model in consideration of the additional (inference-related) information.

In the algorithm (logic) of Figure 5, the NWDAF(MTLF) or the MTLF as such utilizes data sources (and weights), as part of the provided data used for inference, and the required accuracy as inputs, which represents a conceivable (but non-limiting) example. Namely, the specific operations and/or conditions/criteria described in steps 1 and 2 may be altered as appropriate. Further, it is a conceivable (but non-limiting) example that the NWDAF(MTLF) or the MTLF as such performs a periodic evaluation and selects (or, identifies) an ML model to be provisioned based thereon. Hence, the periodic evaluation in step 3 can be omitted such that an ML model to be provisioned in selected (or, identified) upon (elapse of) some (predetermined) time after start of re-/training, upon usage of all (available) training data, or upon some other condition or criterion for finishing re-/training. Still further, it is a conceivable (but non-limiting) example that the NWDAF(MTLF) or the MTLF as such provides an error response (under some condition or criterion). Rather, a predefined and/or default ML model or some other notification may be provided (under some condition or criterion) in step 4.

When in Figure 5 reference is made to (training with) the data source/s, this means that data (collected) from the one or more data sources is used (for training), while weights (indicating a proportion of data to be collected and used from the individual data sources) may optionally be used when two or more data sources are indicated and this parameter is given.

More generally, the internal MTLF logic for specifying the ML model may be extended in various ways. For example, the MTLF logic may be extended to make use of the aforementioned data, i.e. inputs, in order to do one or more of the following: compute or estimate if the theoretical accuracy of an ML model will be achieved when used by the requesting service consumer, determine which model will be the "lightest" ML model (e.g. in terms of inference execution load when used by the requesting service consumer and/or any one of communication, computational and/or networking overhead when used by the requested service provider), determine which ML model training data such as parameters should be adjusted for the requesting service consumer (e.g. minimum sampling rate or ratio) and possibly how such adjustment is to be effected, and determine how much (further) training is required for an existing or a new ML model and, optionally, determine which data (e.g. which parameters and/or from which data sources) is to be collected (networking or communication load/effort) and used (computational load/effort) for this (further) training before specifying and provisioning the ML model to the requesting service consumer. As illustrated, in step 4, one or more other data sources can be used, which are different from the data source/s to be used for inference, if possible, and step 3 could be repeated.

Returning to Figure 4, in step 4, which is illustrated after but can be considered as part of (or at least partly parallel to) step 3 (or the algorithm of Figure 5), the NWDAF(MTLF) performs training data collection. That is, the training data required for the ML model determined in step 3 (in the case that ML model modification or generation is selected) are collected from the data sources using standard mechanisms. It is to be noted that the decision of step 3 has a big impact on what is actually done in step 4 and what impact this has on the performance and the load of the system. For example, the data source/s from which training data is collected may relate to (and thus depend from) the data used for inference, such as e.g. the data sources that will be used for inference and/or the associated weight indicator, the data to be collected may relate to (and thus depend from) the data used for inference, such as e.g. the indication of specific instances or sets or specific parameters, or the like. As is evident, step 4 is optional, i.e. step 4 is not performed in the case that provision of an existing trained ML model is selected in step 3).

In step 5, the NWDAF(MTLF) performs ML model provisioning in response to the request. Namely, the NWDAF(MTLF) provisions ML model information about the ML model specified in step 3 or, stated in other words, the ML model specified in step 3 as such or information about the ML model specified in step 3. Here, the ML model information comprises the model or an identifier or location of the specified ML model, such as e.g. a model URL, and data used for training, i.e. training data which has been used for training of the specified ML model. It is to be noted that the data used for training (or training data), as included here, is not necessarily the same as the data used for inference. Further, it is to be noted that information on the training data (such as e.g. information or metadata relating to the training data) may be included/provided, either instead of in addition to the training data as such. In this example, such response is made by (transmitting) an ML model provision service notification message such as Nnwdaf_MLModelProvision_Notify, i.e. a corresponding service operation.

Accordingly, the NWDAF(MTLF) provides ML model information, and the NWDAF(AnLF) obtains the ML model information. In this example, as the ML model information is included in Nnwdaf_MLModelProvision_Notify, i.e. an ML model provisioning response or an ML model provision service notification message, the ML model information is provided at/by the NWDAF(MTLF) by inclusion in the response/message to be transmitted, i.e. Nnwdaf_MLModelProvision_Notify, and the ML model information is obtained at/by the NWDAF(AnLF) by extraction from the received response/message, i.e. Nnwdaf_MLModeIProvision_Notify.

In step 6, the NWDAF(AnLF) executes inference based on the received ML model. Namely, NWDAF(AnLF) uses the ML model received or referenced to in step 5 in order to compute the analytics data that were requested by the request in step 1. Accordingly, the NWDAF(AnLF) executes inference based on the specified ML model and the additional information received in step 5, for deriving a result of the requested analytics service. That is, the inference operation or execution of/by the service consumer is based on and/or uses the ML model provisioned by the service provider and, if provided, the additionally provided information of training data underlying the provisioned ML model.

In step 7, the NWDAF(AnLF) provides an analytics service response to the analytics consumer. Here, the analytics service response, in addition to the result (ore report) of the requested analytics service, as derived by using the ML model in step 6, may comprise data used for inference, i.e. inference data which has been used for inference (i.e. analytics data derivation) based on the specified ML model. That is, the NWDAF(AnLF) sends to the analytics consumer notifications with the computed analytics for the requested AnalyticsId, optionally with the addition that it may also provide information about which data has been used for inference. The data used for inference (or inference data) can be useful in order to determine the level of trust that the analytics consumer can have in the received results. It is to be noted that the data used for inference, as included here, is not necessarily the same as the data that can be possibly used for the requested AnalyticsId, but the data that have actually been used for the requested AnalyticsId. Further, it is to be noted that information on the inference data (such as e.g. information or metadata relating to the inference data) may be included/provided, either instead of in addition to the inference data as such. In this example, such response is made by (transmitting) an analytics service notification message such as Nnwdaf_AnalyticsSubscription_Notify, i.e. a corresponding service operation.

As is evident, the response or notification message of the NWDAF that provides the analytics to the NF that has requested the analytics can be extended in order to indicate which data (e.g. data sources, parameters, etc.) have been used for inference during usage of the provisioned ML model in order to provide analytics to an NF service consumer.

Accordingly, the NWDAF(AnLF) provides result and inference data, and the analytics consumer obtains the result and inference data. In this example, as the result and inference data is included in Nnwdaf_AnalyticsSubscription_Notify, i.e. an analytics data response or an analytics service notification message, the result and inference data is provided at/by the NWDAF(AnLF) by inclusion in the response/message to be transmitted, i.e. Nnwdaf_AnalyticsSubscription_Notify, and the result and inference data is obtained at/by the analytics consumer by extraction from the received response/message, i.e. Nnwdaf_AnalyticsSubscription_Notify.

In view of the example procedure illustrated in Figure 4, which represents a conceivable but non-limiting use case of at least some exemplifying embodiments, the following specific features can be noticed:
- extension of the ML model provisioning request
- extension of the internal MTLF logic for ML model specification
- extension of the ML model provisioning response
- extension of the network function service response

According to various exemplifying embodiments, one or more of these specific features, in any conceivable combination, or equivalents thereof, can be realized/implemented in a mobile/wireless communication system.

By virtue of the present disclosure, as evident from the above, inference-aware ML (machine learning) model provisioning in a mobile/wireless communication system can be enabled/realized. Thereby, ML model provisioning, i.e. an ML model provision service, can be enhanced and/or improved/optimized, especially facilitating a more appropriate (well-informed) decision on the operation to be performed by a service provider in response to an ML model request from a service consumer.

According to exemplifying embodiments, additional information, i.e. information related to how inference will actually take place at the service consumer once the ML model has been received/provisioned and put into action, is exchanged between a service consumer and a service provider. This additional information is used by the service provider to take a more appropriate (well-informed) decision on the operation to be performed for ML model provisioning.

According to exemplifying embodiments, it is possible to achieve (at least, with a higher probability) a higher (or, the required) accuracy compared to conventional mechanisms in the context of ML model provisioning (for network automation, such as e.g. network data analytics). Also, lower load or overhead, such as e.g. 5G core network overhead, can be caused in terms of computational load (e.g. processing and/or memory power/capacity) and/or networking or communication load (e.g. signaling) in/for training, and/or lower inference execution load can be caused in/during inference. For example, exemplifying embodiments described herein can achieve a higher accuracy in the context of ML model provisioning, while (potentially even) requiring lower load or overhead.

The above-described functionality as well as its related operations, procedures, methods and processes may be implemented by respective functional elements, entities, modules, units, processors, or the like, as described below. These functional elements, entities, modules, units, processors, or the like, i.e. the implementation of one or more exemplifying embodiments, may be realized in a cloud environment.

While in the foregoing exemplifying embodiments of the present disclosure are described mainly with reference to operations, procedures, methods and processes, corresponding exemplifying embodiments of the present disclosure also cover respective apparatuses, entities, modules, units, network nodes and/or systems, including software and/or hardware thereof.

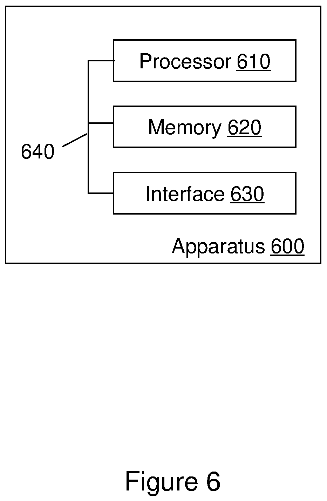

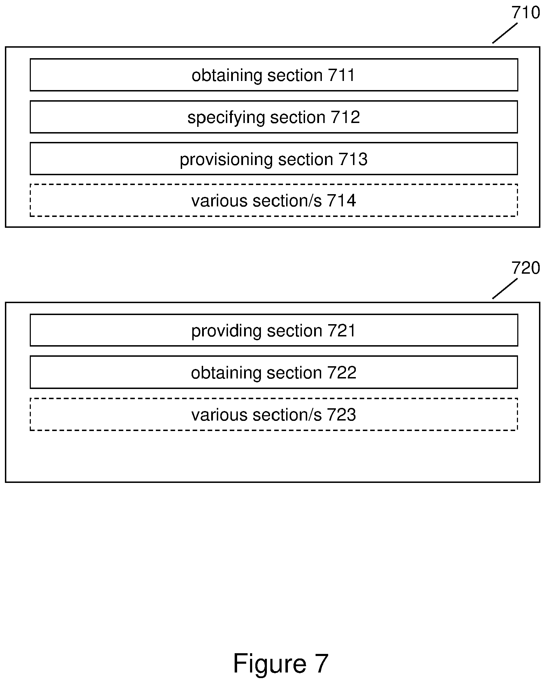

Respective exemplifying embodiments of the present invention are described below referring to Figures 6 and 7, while for the sake of brevity reference is made to the detailed description of respective corresponding configurations/setups, schemes, processes, sequences, methods as well as functionalities, principles and operations according to Figures 1 to 5.

In Figures 6 and 7, the blocks are basically configured to perform respective methods, procedures and/or functions as described above. The entirety of blocks are basically configured to perform the methods, procedures and/or functions as described above, respectively. With respect to Figures 6 and 7, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figures 6 and 7, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to exemplifying embodiments.

Figure 6 shows a schematic diagram illustrating an example of a structure of apparatuses according to at least one exemplifying embodiment. Herein, an apparatus can represent a physical entity or component, i.e. a structural device implementing a specific network element, entity or function or the functionality thereof as such, or a functional or logical entity or component. For example, the thus illustrated apparatus may be realized in or by a server or the like in a cloud environment, i.e. by a cloud-based implementation, by way of software-defined networking (SDN), by way of network function virtualization (NFV), or the like.

As indicated in Figure 6, according to at least one exemplifying embodiment, an apparatus 600 may comprise or realize at least one processor 610 and at least one memory 620 (and possibly also at least one interface 630), which may be operationally connected or coupled, for example by a bus 640 or the like, respectively.

The processor 610 and/or the interface 630 of the apparatus 600 may also include a modem or the like to facilitate communication over a (hardwire or wireless) link, respectively. The interface 630 of the apparatus 600 may include a suitable transmitter, receiver or transceiver connected or coupled to one or more antennas, antenna units, such as antenna arrays or communication facilities or means for (hardwire or wireless) communications with the linked, coupled or connected device(s), respectively. The interface 630 of the apparatus 600 is generally configured to communicate with at least one other apparatus, device, node or entity (in particular, the interface thereof).

The memory 620 of the apparatus 600 may represent a (non-transitory/tangible) storage medium (e.g. RAM, ROM, EPROM, EEPROM, etc.) and store respective software, programs, program products, macros or applets, etc. or parts of them, which may be assumed to comprise program instructions or computer program code that, when executed by the respective processor, enables the respective electronic device or apparatus to operate in accordance with the exemplifying embodiments of the present invention. Further, the memory 620 of the apparatus 600 may (comprise a database to) store any data, information, or the like, which is used in the operation of the apparatus.

In general terms, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the thus illustrated apparatus 600 is suitable for use in practicing one or more of the exemplifying embodiments, as described herein.

When in the subsequent description it is stated that the processor (or some other means) is configured to perform some function, this is to be construed to be equivalent to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function. It should be appreciated that herein processors, or more generally processing portions, should not be only considered to represent physical portions of one or more processors, but may also be considered as a logical division of the referred processing tasks performed by one or more processors.

According to at least one exemplifying embodiment, the thus illustrated apparatus 600 may represent or realize/embody a (part of a) network entity in a mobile communication system, such as an NWDAF, NWDAF(MTLF) or MTLF entity. Hence, the apparatus 600 may be configured to perform a procedure and/or exhibit a functionality and/or implement a mechanism, as described (for a network entity, e.g. NWDAF(MTLF)) in any one of Figures 2, 4 and 5.

Accordingly, the apparatus 600 may be caused or the apparatus 600 or its at least one processor 610 (possibly together with computer program code stored in its at least one memory 620), in its most basic form, is configured to obtain machine-learning model request information, including model-related information indicating one or more properties of a requested machine-learning model and inference-related information indicating one or more properties of execution of inference based on the requested machine-learning model, specify a machine-learning model to be provisioned based on the obtained machine-learning model request information, and provision machine-learning model information about the specified machine-learning model.

According to at least one exemplifying embodiment, the thus illustrated apparatus 600 may represent or realize/embody a (part of a) network entity in a mobile communication system, such as an NWDAF, NWDAF(AnLF) or AnLF entity. Hence, the apparatus 600 may be configured to perform a procedure and/or exhibit a functionality and/or implement a mechanism, as described (for a network entity, e.g. NWDAF(AnLF)) in any one of Figures 3 and 4.

Accordingly, the apparatus 600 may be caused or the apparatus 600 or its at least one processor 610 (possibly together with computer program code stored in its at least one memory 620), in its most basic form, is configured to provide machine-learning model request information, including model-related information indicating one or more properties of a requested machine-learning model and inference-related information indicating one or more properties of execution of inference based on the requested machine-learning model, and obtain machine-learning model information about a specified machine-learning model in response to the machine-learning model request information.

For further details regarding the operability/functionality of the apparatus (i.e. the processor 610 (possibly together with computer program code stored in its at least one memory 620)) according to exemplifying embodiments, reference is made to the above description in connection with any one of Figures 1 to 5, respectively.

As mentioned above, an apparatus according to at least one exemplifying embodiment may be structured by comprising respective units or means for performing corresponding operations, procedures and/or functions. For example, such units or means may be implemented/realized on the basis of an apparatus structure, as exemplified in Figure 6, i.e. by one or more processors 610, one or more memories 620, one or more interfaces 630, or any combination thereof.

Figure 7 shows a schematic diagram illustrating an example of a structure of apparatuses according to at least one exemplifying embodiment.

As shown in Figure 7, an apparatus 710 according to at least one exemplifying embodiment may represent or realize/embody a (part of a) network entity in a mobile communication system, such as an NWDAF, NWDAF(MTLF) or MTLF entity. Hence, the apparatus 710 may be configured to perform a procedure and/or exhibit a functionality and/or implement a mechanism, as described (for a network entity, e.g. NWDAF(MTLF)) in any one of Figures 2, 4 and 5.

Such apparatus may comprise (at least) an obtaining unit/means/circuitry denoted by obtaining section 711, which represents any implementation for (or configured to) obtaining (obtain) machine-learning model request information, including model-related information indicating one or more properties of a requested machine-learning model and inference-related information indicating one or more properties of execution of inference based on the requested machine-learning model, a specifying unit/means/circuitry denoted by specifying section 712, which represents any implementation for (or configured to) specifying (specify) a machine-learning model to be provisioned based on the obtained machine-learning model request information, and a provisioning unit/means/circuitry denoted by provisioning section 713, which represents any implementation for (or configured to) provisioning (provision) machine-learning model information about the specified machine-learning model.

Further, such apparatus may also comprise one or more sections 714, which represent any implementation, such as a unit, a means, a circuitry or the like, for (or configured to) realize/implement any one of the additional and/or optional functionalities or operations of the concerned network entity, e.g. NWDAF(MTLF), as described above.

As shown in Figure 7, an apparatus 720 according to at least one exemplifying embodiment may represent or realize/embody a (part of a) network entity in a mobile communication system, such as an NWDAF, NWDAF(AnLF) or AnLF entity. Hence, the apparatus 720 may be configured to perform a procedure and/or exhibit a functionality and/or implement a mechanism, as described (for a network entity, e.g. NWDAF(AnLF)) in any one of Figures 3 and 4.

Such apparatus may comprise (at least) an providing unit/means/circuitry denoted by providing section 721, which represents any implementation for (or configured to) providing (provide) machine-learning model request information, including model-related information indicating one or more properties of a requested machine-learning model and inference-related information indicating one or more properties of execution of inference based on the requested machine-learning model, and an obtaining unit/means/circuitry denoted by obtaining section 722, which represents any implementation for (or configured to) obtaining (obtain) machine-learning model information about a specified machine-learning model in response to the machine-learning model request information.

Further, such apparatus may also comprise one or more sections 723, which represent any implementation, such as a unit, a means, a circuitry or the like, for (or configured to) realize/implement any one of the additional and/or optional functionalities or operations of the concerned network entity, e.g. NWDAF(AnLF), as described above.

For further details regarding the operability/functionality of the apparatuses (or units/means thereof) according to exemplifying embodiments, reference is made to the above description in connection with any one of Figures 1 to 5, respectively.

According to exemplifying embodiments of the present disclosure, any one of the (at least one) processor, the (at least one) memory and the (at least one) interface, as well as any one of the illustrated units/means, may be implemented as individual modules, chips, chipsets, circuitries or the like, or one or more of them can be implemented as a common module, chip, chipset, circuitry or the like, respectively.

According to exemplifying embodiments of the present disclosure, a system may comprise any conceivable combination of any depicted or described apparatuses and other network elements or functional entities, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a basic system architecture of a (tele)communication network including a mobile communication system where some examples of exemplifying embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of exemplifying embodiments may also be able to communicate with other networks, such as a public switched telephone network or the Internet, including the Internet-of-Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is suitable to be implemented as software or by hardware without changing the idea of the present disclosure. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units/means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for enabling/realizing inference-aware ML (machine learning) model provisioning, e.g. to support network data analytics, in a mobile/wireless communication system. Such measures exemplarily comprise that ML model request information, including model-related information indicating one or more properties of a requested ML model and inference-related information indicating one or more properties of execution of inference based on the requested ML model, is provided from a first network entity (representing a service consumer of a network data analytics service) to a second network entity (representing a service provider of the network data analytics service), the second network entity specifies an ML model to be provisioned based on the ML model request information, and ML model information about the specified ML model is provided from the second network entity to the first network entity.

Even though the present disclosure is described above with reference to the examples according to the accompanying drawings, it is to be understood that the present disclosure is not restricted thereto. Rather, it is apparent to those skilled in the art that the present disclosure can be modified in many ways without departing from the scope of the inventive idea as disclosed herein.

### List of acronyms and abbreviations

- 3GPP: 3rd Generation Partnership Project
- 5G: 5^{th} Generation
- AF: Application Function
- AMF: Access and Mobility Management Function
- AnLF: Analytics Logical Function
- DCCF: Data Collection Coordination Function
- ML: Machine Learning
- MTLF: Model Training Logical Function
- NF: Network Function
- NWDAF: Network Data Analytics Function
- OAM: Operations, Administration, and Maintenance
- PCF: Policy Control Function
- SMF: Session Management Function
- URL: Uniform Resource Locator
- UE: User Equipment

## Claims

1. An apparatus of a network entity in a mobile communication system, comprising:
means for obtaining machine-learning model request information, including model-related information indicating one or more properties of a requested machine-learning model and inference-related information indicating one or more properties of execution of inference based on the requested machine-learning model,
means for specifying a machine-learning model to be provisioned based on the obtained machine-learning model request information, and
means for provisioning machine-learning model information about the specified machine-learning model.

2. The apparatus according to claim 1, wherein the inference-related information comprises at least one of
inference usage data being data to be used for execution of inference based on the requested machine-learning model,
inference granularity data indicating a granularity of data to be used for execution of inference based on the requested machine-learning model,
inference application data indicating an application for execution of inference based on the requested machine-learning model, and
inference environment data indicating a condition of an execution environment to be used for execution of inference based on the requested machine-learning model.

3. The apparatus according to claim 2, wherein the inference usage data comprises
one or more data sources used for collecting data to be used for execution of inference.

4. The apparatus according to claim 3, wherein the inference usage data comprises at least one of
a weight indication indicating a relative amount of data to be used for execution of inference, which is collected from respective data sources, and
data details indicating, for respective data sources, one or more of at least one specific instance and/or set of data to be used for execution of inference and at least one specific parameter.

5. The apparatus according to any one of claims 2 to 4, wherein
the inference granularity data comprises at least one of a minimum sampling rate or ratio, a maximum time interval and a total number of input values of data to be used for execution of inference, and/or
the inference environment data comprises at least one of computation and/or memory capacity available for execution of inference.

6. The apparatus according to any one of claims 1 to 5, wherein specifying the machine-learning model to be provisioned comprises one of
selecting an existing trained machine-learning model as the machine-learning model to be provisioned,
modifying an existing trained machine-learning model to become the machine-learning model to be provisioned, and
generating a new machine-learning model to be trained as the machine-learning model to be provisioned.

7. The apparatus according to any one of claims 1 to 6, wherein specifying the machine-learning model to be provisioned comprises at least one of
determining whether a machine-learning model is capable of achieving a level of accuracy to be achieved by the requested machine-learning model or a tolerance value based on the level of accuracy to be achieved by the requested machine-learning model,
determining whether a machine-learning model is capable of achieving its theoretical accuracy when inference is executed based thereon,
determining a machine-learning model which achieves the highest accuracy,
determining a machine-learning model which is lightest in terms of one or more of inference execution load and any one of communication, computation and/or networking overhead,
determining training data for a new machine-learning model or an existing trained machine-learning model,
determining a level of required re-/training of an existing trained machine-learning model or a new machine-learning model.

8. The apparatus according to any one of claims 1 to 7, wherein the machine-learning model information comprises training data and/or information on training data, said training data being data used for training of the specified machine-learning model.

9. An apparatus of a network entity in a mobile communication system, comprising:
means for providing machine-learning model request information, including model-related information indicating one or more properties of a requested machine-learning model and inference-related information indicating one or more properties of execution of inference based on the requested machine-learning model, and
means for obtaining machine-learning model information about a specified machine-learning model in response to the machine-learning model request information.

10. The apparatus according to claim 9, wherein the inference-related information comprises at least one of
inference usage data being data to be used for execution of inference based on the requested machine-learning model,
inference granularity data indicating a granularity of data to be used for execution of inference based on the requested machine-learning model,
inference application data indicating an application for execution of inference based on the requested machine-learning model
inference environment data indicating a condition of an execution environment to be used for execution of inference based on the requested machine-learning model.

11. The apparatus according to claim 10, wherein the inference usage data comprises
one or more data sources used for collecting data to be used for execution of inference.

12. The apparatus according to claim 11, wherein the inference usage data comprises at least one of
a weight indication indicating a relative amount of data to be used for execution of inference, which is collected from respective data sources, and
data details indicating, for respective data sources, one or more of at least one specific instance and/or set of data to be used for execution of inference and at least one specific parameter.

13. The apparatus according to any one of claims 10 to 12, wherein
the inference granularity data comprises at least one of a minimum sampling rate or ratio, a maximum time interval and a total number of input values of data to be used for execution of inference, and/
the inference environment data comprises at least one of computation and/or memory capacity available for execution of inference.

14. The apparatus according to any one of claims 9 to 13, wherein the machine-learning model information comprises training data and/or information on training data, said training data being data used for training of the specified machine-learning model.

15. The apparatus according to any one of claims 9 to 14, further comprising:
means for obtaining a network function service request,
means for executing inference based on the specified machine-learning model for deriving a result of the requested network function service, and
means for providing a network function service response, including the derived result and at least one of inference data and information on inference data, said inference data being data used for execution of inference.

16. The apparatus according to claim 15, wherein
providing the machine-learning model request information is triggered by obtaining the network function service request, and/or
the inference data relates to one or more of at least one data source, at least one specific instance and/or set of data and at least one specific parameter.

17. A method of a network entity in a mobile communication system, comprising:
obtaining machine-learning model request information, including model-related information indicating one or more properties of a requested machine-learning model and inference-related information indicating one or more properties of execution of inference based on the requested machine-learning model,
specifying a machine-learning model to be provisioned based on the obtained machine-learning model request information, and
provisioning machine-learning model information about the specified machine-learning model.

18. A method of a network entity in a mobile communication system, comprising:
providing machine-learning model request information, including model-related information indicating one or more properties of a requested machine-learning model and inference-related information indicating one or more properties of execution of inference based on the requested machine-learning model, and
obtaining machine-learning model information about a specified machine-learning model in response to the machine-learning model request information.

19. A computer program product comprising computer program code which, when the computer program code is executed on a computer, is configured to cause the computer to function as the apparatus according to any one of claims 1 to 8 or any one of claims 9 to 16, or to carry out the method according to claim 17 or claim 18.
